# EUROPÄISCHE PATENTSCHRIFT

(11) **EP 1 181 505 B1**
(45) Veröffentlichungstag und Bekanntmachung des Hinweises auf die Patenterteilung: **02.01.2008**
(21) Anmeldenummer: 00943640.3
(22) Anmeldetag: 25.05.2000
(51) Int. Cl.: G01D 11/24, G01L 19/14

(54) **SENSORBAUGRUPPE MIT EINEM AN EINER WAND MONTIERBAREN GEHÄUSE**
SENSOR MODULE WITH A HOUSING THAT CAN BE MOUNTED ON A WALL
COMPOSANT DETECTEUR DOTE D'UN BOITIER POUVANT ETRE FIXE A UNE PAROI

(30) Priorität: 25.05.1999 DE 19923985
(43) Veröffentlichungstag der Anmeldung: 27.02.2002
(73) Patentinhaber: Siemens VDO Automotive AG, 93055 Regensburg (DE)
(72) Erfinder: DIRMEYER, Josef, D-92439 Bodenwöhr (DE); GRUBER, Robert, D-93057 Regensburg (DE); SCHMIDT, Harald, D-93049 Regensburg (DE)
(74) Vertreter: Maier, Daniel Oliver
(86) Internationale Anmeldenummer: PCT/DE2000/001686
(87) Internationale Veröffentlichungsnummer: WO 2000/071978

(56) Entgegenhaltungen:
- DE-A- 4 321 068
- DE-A- 19 737 821
- US-A- 5 625 156
- US-A- 5 814 765

## Beschreibung

Die Erfindung betrifft eine Sensorbaugruppe mit einem an einer Wand montierbaren Gehäuse gemäß dem Oberbegriff der unabhängigen Patentansprüche.

Eine gattungsgemäße Sensorbaugruppe ist aus der DE 197 37 821 A1 bekannt. In einem wasserdichten Gehäuse ist ein in einem Schutzmittel, beispielsweise eine Elastomeremasse, eingebettetes Sensorelement vorgesehen, welches über einen Durchgangskanal mit der Atmosphäre oder einer unter Druck stehenden Umgebung beaufschlagbar ist. Von einer druckempfindlichen Fläche oder Membran des Sensorelementes führt ein Kanal zu einem Rohrstutzen, der in ein Dichtelement einrasten kann, welches sich in einem Gehäuse oder einer Wand befindet. Dadurch ist die druckempfindliche Fläche des Sensors mit Umgebungsdruckschwankungen beaufschlagbar, ohne dass der Drucksensor Umgebungsfeuchtigkeit ausgesetzt ist.

Eine Sensorbaugruppe ist weiterhin aus der DE 44 47 513 A1 bekannt. Das Gehäuse dieser Sensorbaugruppe ist wasserdicht ausgebildet und weist ein Oberteil und ein Unterteil sowie eine zwischen dem Oberteil und dem Unterteil angeordnete Dichtung auf. Zwischen dem Oberteil und dem Unterteil ist bei zusammengebautem Gehäuse eine Leiterplatte aufgenommen, auf der ein Drucksensor angeordnet ist. Der Drucksensor wird von einem Dichtkissen umgeben, das bei zusammengebauten Gehäuse von dem Oberteil gegen die Leiterplatte gedrückt wird und den Innenraum des Gehäuses gegenüber einem Durchgangskanal abdichtet, der durch einen einteilig mit dem Oberteil ausgebildeten Rohrstutzen gebildet ist, durch den hindurch die druckempfindliche Fläche des Drucksensors mit Umgebungsdruckschwankung beaufschlagbar ist. Zur Abdichtung des Drucksensors gegenüber Feuchtigkeit aus der Umgebung ist das den Drucksensor umschließende Dichtkissen mit einer Membran versehen. Die bekannte Sensorbaugruppe wird beispielsweise in Fahrzeugseitentüren zur Aufprallerkennung angebracht. Dabei ist aus Gründen der Funktionssicherheit absolute Wasserdichtigkeit erforderlich, da in den unterhalb der Scheiben angeordneten Türhohlraum Wasser und Schmutz eindringt.

In der DE 43 21 068 A1 wird ein Drucksensor mit einem Gehäuse offenbart, das ein Druckfühlerelement und eine Verdrahtungsplatte beherbergt. Die Vertragungsplatte nimmt einen Leiterrahmen auf, der Ausgangsanschlüsse des Fühlerelements mit den Enden von Anschlussstiften verbindet. Ein Druckleiter weist einen Druckpfad und einen Flansch auf, der in eine Öffnung des Gehäuses unter luftdichter Verbindung des Druckpfads mit einem sich vom Fühlerelement erstreckenden Druckeinlass eingefügt ist, wobei eine Endfläche des Flansches von der Verdrahtungsplatte beabstandet ist. Das Fühlerelement, die Verdrahtungsplatte und der Flansch des Druckleiters im Gehäuse sind mit Vergussmaterial beschichtet.

Der Erfindung liegt die Aufgabe zugrunde, eine gattungsgemäße Sensorbaugruppe derart weiterzubilden, dass an die Wasser- und Schmutzdichtigkeit des Gehäuses verminderte Anforderungen gestellt werden, dass mit der Sensorbaugruppe aber dennoch in einem Feuchtigkeit, Verschmutzungen oder sonstigen harten Umgebungsbedingungen ausgesetzten Raum bestimmte Parameter sensiert werden können.

Diese Aufgabe wird mit den Merkmalen des unabhängigen Patentanspruches gelöst. Die erfindungsgemäße Sensorbaugruppe kann an einer Seite einer Wand angeordnet werden, die beispielsweise einen Feuchtraum von einem Trockenraum trennt, und den zu sensierenden Parameter durch die Wand hindurch erfassen, wobei sichergestellt ist, dass das Gehäuseinnere, das beispielsweise elektronische Schaltkreise und ähnliches aufnimmt, vor Einflüssen der jenseits der Wand vorhandenen schädlichen Umgebungsbedingungen geschützt ist. Das Sensorelement kann beispielsweise zum Sensieren von Temperaturen, Feuchtigkeiten, Druckschwankungen usw. geeignet sein.

Die abhängigen Ansprüche 2 bis 3 sind auf bevorzugte und vorteilhafte konstruktive Ausführungen und Weiterbildungen der erfindungsgemäßen Sensorbaugruppe gerichtet.

Die Unteransprüche 4 und 5 sind insbesondere auf die Ausbildung der Sensorbaugruppe zum Sensieren von Druckschwankungen gerichtet, so dass die erfindungsgemäße Sensorbaugruppe beispielsweise mit Vorteil in Fahrzeugseitentüren verwendet werden kann, die mit einer in Fahrzeuglängsrichtung verlaufenden Trennwand versehen sind, die die Seitentüre in zwei Räume unterteilt. In einem Trockenraum ist die gesamte in der Fahrzeugtüre anzuordnende Elektronik, beispielsweise Fenstermotoren, Schließelektronik usw. angeordnet. Dieser Trockenraum ist durch die Trennwand gegenüber dem türaußenseitigen Feuchtraum, in den Feuchtigkeit, Schmutz usw. eindringt, abgetrennt. Bei der erfindungsgemäßen Sensorbaugruppe kann das Gehäuse an der Trennwand innerhalb des Trockenraums angeordnet werden. Dennoch kann der im Feuchtraum der Fahrzeugtüre herrschende Druck sensiert werden, was zwingend erforderlich ist, wenn aus vom Türaußenblech ausgehenden Druckschwankungen auf einen Seitenaufprall geschlossen werden soll. Auf diese Weise kann die erfindungsgemäße Sensorbaugruppe mit einem Gehäuse ausgebildet werden, an dessen Dichtigkeitsanforderungen verminderte Ansprüche gestellt werden und das deshalb kostengünstig herstellbar ist.

Die Erfindung wird im folgenden anhand schematischer Zeichnungen beispielsweise und mit weiteren Einzelheiten erläutert.

Es stellen dar:
- Fig. 1a: eine perspektivische Ansicht auf eine Sensorbaugruppe von oben,
- Fig. 1b: eine perspektivische Ansicht auf die Sensorbaugruppe entsprechend Figur 1a von unten,
- Fig. 2: eine Seitenansicht, teilweise aufgeschnitten, der Sensorbaugruppe und
- Fig. 3: eine perspektivische Seitenansicht, teilweise aufgeschnitten, der Sensorbaugruppe entsprechend Fig. 2

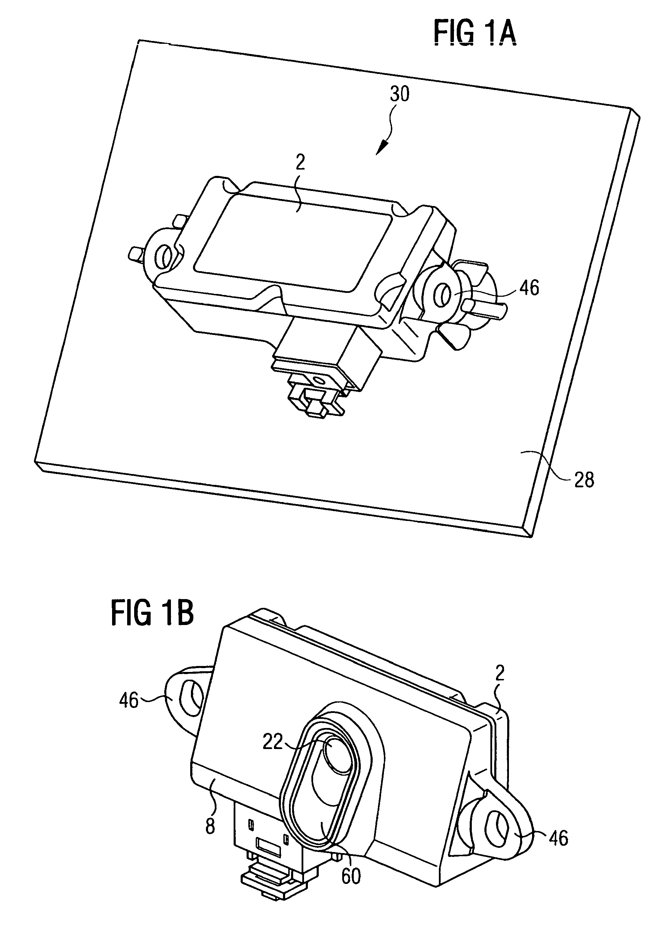

Die Figuren 1a und 1b zeigen eine erfindungsgemäße Sensorbaugruppe.

So zeigen die Figuren 1a und 1b jeweils perspektivische Ansichten einer Sensorbaugruppe von oben (Fig. 1a). d.h. vom Trockenraum 30 her gesehen, sowie von unten (Fig. 1b), d.h. vom Feuchtraum 32 her gesehen. In Fig. 1a ist die über Gehäuseansätze 46 an der Wand 28 montierte Sensorbaugruppe erkennbar, wobei das Gehäuse 2 zum Betrachter hinweist. In der Fig. 1b ist die gleiche Sensorbaugruppe von ihrer Unterseite her dargestellt, wobei ebenfalls die Gehäuseansätze 46 sowie das vom Betrachter wegweisende Gehäuse 2 erkennbar sind. Durch den Deckel 8 ragt hierbei der Durchgangskanal 22 sowie eine Ablaufnase 60. Die besondere Gestaltung und Funktion der Ablaufnase 60 wird in den folgenden Figurenbeschreibungen näher erläutert.

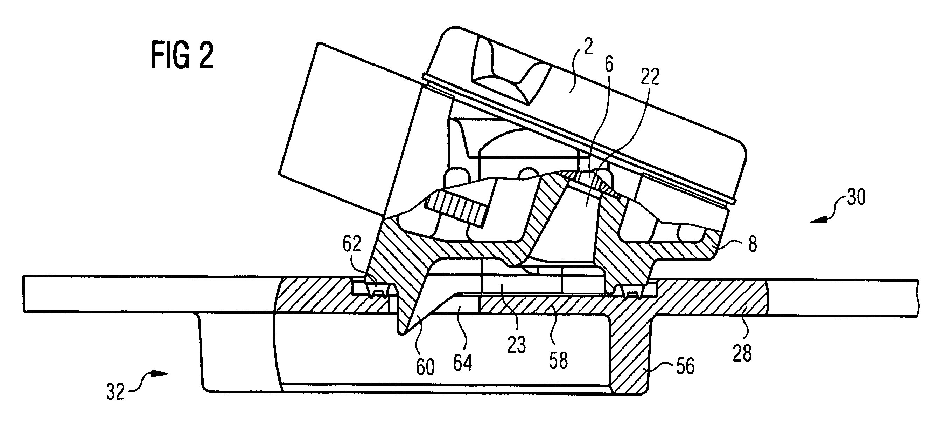

Die Fig. 2 zeigt eine teilweise aufgeschnittene Seitenansicht der erfindungsgemäßen Sensorbaugruppe entsprechend den Figuren 1a und 1b. Erkennbar ist die an der Wand 28 montierte Sensorbaugruppe, die im Wesentlichen vom Gehäuse 2 und Deckel 8 umschlossen ist. Die Sensorbaugruppe ist auf der Seite des Trockenraumes 30 montiert, wobei eine Verbindung des Drucksensors 6 über den Durchgangskanal 22 und einen Durchbruch 64 in der Wand 28 zum Feuchtraum 32 hin besteht. Zwischen Deckel 8 und Wand 28 ist eine umlaufende Dichtung 62 eingelegt, die einen Durchritt von Feuchtigkeit vom Feuchtraum 32 in den Trockenraum 30 verhindern soll.

Erkennbar ist weiterhin eine labyrinthartige Verbindung zwischen Feuchtraum 32 und Drucksensor 6, der damit zuverlässig gegen Spritz- und/oder Schwallwasser aus dem Feuchtraum 32 geschützt wird. Dieser Schutz wird aus mehreren Komponenten gebildet, nämlich dem umlaufenden Abweiser 56, der stegartig aus der Wand 28 ragt und den Durchbruch 64 von drei Seiten umschließt. Lediglich nach unten hin ist der stegartige Abweiser 56 unterbrochen, so dass Spritz- oder Schwallwasser sowie kondensierte Feuchtigkeit ungehindert nach unten, an der Wand entlang ablaufen kann. In den Durchbruch 64 ragt eine an den Deckel 8 angeformte Ablaufnase 60, die ebenfalls einen ungehinderten Wasserablauf nach unten gestattet. Die Ablaufnase berührt dabei nicht die Wand 28 und die Kanten des Durchbruchs 64, so dass alles Wasser, das sich in der Ablaufnase 60 sammelt, ungehindert abtropfen kann. Ein Teil der Wand 28 ist als Spritzwall 58 gestaltet, der so vor dem Durchgangskanal 22 angeordnet ist, dass dieser sowie der an dessen Ende befindliche Drucksensor 6 vor jedem direkten Spritz- und Schwallwasser geschützt sind.

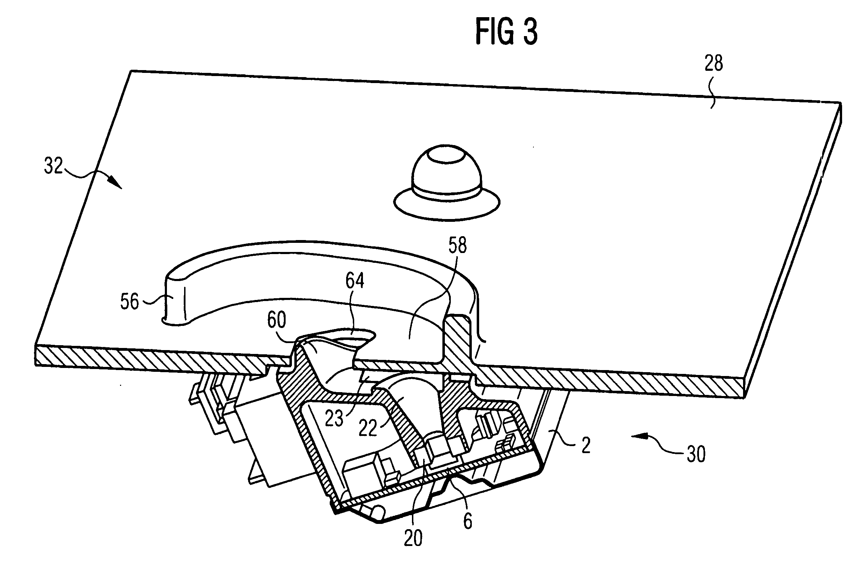

Die besondere Anordnung der mit der Ablaufnase 60 durch den Durchbruch 64 in der Wand 28 in den Feuchtraum 32 ragenden Sensorbaugruppe ist in der perspektivischen Teilschnittansicht der Fig. 3 nochmals deutlicher erkennbar. Die Darstellung ist so gedreht, dass der linke Bildteil im eingebauten Zustand nach unten weist, so dass der offene Abschnitt des stegartig an die Wand 28 angeformten Abweisers 56 nach unten weist und damit einen ungehinderten Ablauf allen Spritz- und Schwallwassers ermöglicht. Gleichzeitig sorgt er für einen gewissen Spritzschutz von den übrigen Seiten und verhindert eine zu starke Einwirkung von Spritz- und Schwallwasser auf den hinter dem Durchbruch 64 liegenden und zum Durchgangskanal 22 führenden Kanal 23. Deutlich erkennbar ist in dieser Darstellung zudem die nach unten sich verjüngende Ablaufnase, deren innere muldenartige Oberfläche in einem Winkel, der größer als 30° ist, gegenüber dem Kanal 23 nach außen abgewinkelt ist, so dass in den Kanal 23 eingedrungenes Wasser über die muldenartig geformte Ablaufnase 60 nach unten, in den unteren Bereich des Feuchtraumes 32, abtropfen bzw. ablaufen kann.

Es versteht sich, dass die beschriebene Ausführungsform nur beispielhaft ist und über die beschriebene Ausführungsform hinaus weitere vielfältige Abwandlungen möglich sind, mit denen die druckempfindliche Fläche des Drucksensors 6 entweder unmittelbar oder unter Zwischenschaltung der Membran durch die Wand 28 hindurch mit dem Feuchtraum 32 verbunden ist, der Druckraum 30 und das Gehäuseinnere aber dennoch zuverlässig gegen den Feuchtraum 32 abgedichtet sind.

## Patentansprüche

1. Sensorbaugruppe mit
einem an einer Wand (28) montierbaren Gehäuse (2),
einem in dem Gehäuse angeordneten Sensorelement (6),
einem eine Sensorfläche des Sensorelements umgebenden Dichtkissen (20), welches mit einem die Sensorfläche mit der Umgebung verbindenden Durchgangskanal (22) ausgebildet ist und den Innenraum des Gehäuses zur Umgebung hin abdichtet, und
mit einem weiteren Kanal (23), dessen eines Ende in den Durchgangskanal (22) mündet, der dichtend an dem Dichtkissen anliegt
**dadurch gekennzeichnet,**
**dass** der weitere Kanal (23) bei an der Wand angeordnetem Gehäuse (2) den Durchgangskanal unter Abdichtung gegenüber dem Innenraum des Gehäuses (2) durch einen Durchbruch (64) der Wand hindurch dicht mit der Umgebung verbindet, und
**dass** der weitere Kanal (23) in eine durch den Durchbruch (64) der Wand hindurch führende Ablaufnase (60) mündet,
wobei die Ablaufnase (60) einen nach unten weisenden muldenförmigen Ablaufbereich aufweist, über den Feuchtigkeit und/oder Wasser abtropfen kann.

2. Sensorbaugruppe nach Anspruch 1, **dadurch gekennzeichnet, dass** das Gehäuse einen Deckel (8) aufweist,
durch den die Ablaufnase (60) hindurchführt, und dass die Ablaufnase sowie der weitere Kanal (23) von einem Ringflansch umgeben sind, der an der Innenseite des Deckels (8) anliegt.

3. Sensorbaugruppe nach einem der vorhergehenden Ansprüche, **dadurch gekennzeichnet, dass** das Sensorelement (6) auf einer zwischen Teilen des Gehäuses (2) eingespannten Leiterplatte (4) angeordnet ist.

4. Sensorbaugruppe nach einem der vorhergehenden Ansprüche, **dadurch gekennzeichnet, dass** das Sensorelement ein Drucksensor (6) ist.

5. Sensorbaugruppe nach einem der vorhergehenden Ansprüche, **dadurch gekennzeichnet, dass** zwischen dem Durchgangskanal (22) des Dichtkissens (20) und der Sensorfläche eine Membran (38) angeordnet ist.

## Claims

1. Sensor module having
a housing (2) which can be fitted on a wall (28),
a sensor element (6) arranged in the housing,
a sealing cushion (20) which encloses a sensor surface of the sensor element, is designed with a through-passage channel (22) connecting the sensor surface to the surroundings and seals the interior of the housing in the direction of the surroundings, and a further channel (23), of which one end opens out into the through-passage channel (22), which butts with sealing action against the sealing cushion **characterized in that**, with the housing (2) arranged on the wall, the further channel (23) connects the through-passage channel in a sealed manner to the surroundings through a through-opening (64) of the wall sealing being provided in relation to the interior of the housing (2), and that the further channel (23) opens out into a run-off nose (60) which leads through the through-opening (64) of the wall,
it being the case that the run-off nose (60) has a downwardly oriented hollow-like run-off region via which moisture and/or water can drip off.

2. Sensor module according to Claim 1, **characterized in that** the housing has a cover (8) through which the run-off nose (60) leads, and **in that** the run-off nose and the further channel (23) are enclosed by an annular flange which butts against the inside of the cover (8).

3. Sensor module according to one of the preceding claims, **characterized in that** the sensor element (6) is arranged on a printed circuit board (4) which is clamped inbetween parts of the housing (2).

4. Sensor module according to one of the preceding claims, **characterized in that** the sensor element is a pressure sensor (6).

5. Sensor module according to one of the preceding claims, **characterized in that** a diaphragm (38) is arranged between the through-passage channel (22) of the sealing cushion (20) and the sensor surface.

## Revendications

1. Ensemble capteur comprenant
un boîtier (2) pouvant être monté sur une paroi (28),
un élément capteur (6) disposé dans le boîtier,
un coussin d'étanchéité (20) entourant une surface de détection de l'élément capteur, lequel est réalisé avec un canal de passage (22) reliant la surface de détection à l'environnement et assure l'étanchéité de l'espace intérieur du boîtier en direction de l'environnement et avec un autre canal (23), dont une extrémité débouche dans le canal de passage (22), lequel s'applique de façon étanche sur le coussin d'étanchéité,
**caractérisé en ce que**,
lorsque le boîtier (2) est disposé sur la paroi, l'autre de canal (23) relie le canal de passage de façon étanche à l'environnement en assurant l'étanchéité par rapport à l'espace intérieur du boîtier (2) à travers un passage (64) de la paroi, et **en ce que** l'autre canal (23) débouche dans un bec de sortie (60) passant à travers le passage (64) de la paroi, le bec de sortie (60) présentant une zone de sortie dirigée vers le bas et en forme de cavité, par laquelle de l'humidité et/ou de l'eau peut s'écouler.

2. Ensemble capteur selon la revendication 1, **caractérisé en ce que** le boîtier présente un couvercle (8) par lequel le bec de sortie (60) passe, et **en ce que** le bec de sortie et l'autre canal (23) sont entourés d'une bride annulaire qui s'applique sur le côté intérieur du couvercle (8).

3. Ensemble capteur selon l'une quelconque des revendications précédentes, **caractérisé en ce que** l'élément capteur (6) est disposé sur une carte imprimée (4) serrée entre des parties du boîtier (2).

4. Ensemble capteur selon l'une quelconque des revendications précédentes, **caractérisé en ce que** l'élément capteur est un capteur de pression (6).

5. Ensemble capteur selon l'une quelconque des revendications précédentes, **caractérisé en ce qu'**une membrane (38) est disposée entre le canal de passage (22) du coussin d'étanchéité (20) et la surface de détection.
